# EUROPEAN PATENT APPLICATION

(11) **EP 2 983 409 A1**
(43) Date of publication of application: **10.02.2016**
(21) Application number: 14778354.2
(22) Date of filing: 31.03.2014
(51) Int. Cl.: H04W 36/34, H04W 36/14

(54) **METHOD AND APPARATUS FOR DETERMINING NETWORK SWITCHING**

(30) Priority: 01.04.2013 CN 201310111462
(71) Applicant: China Academy of Telecommunications Technology, Hai Dian District Beijing 100191 (CN)
(72) Inventor: LIANG, Jing, Beijing 100191 (CN)
(74) Representative: Körfer, Thomas
(86) International application number: PCT/CN2014/074387
(87) International publication number: WO 2014/161451

(57) **Abstract**

Disclosed are a method and an apparatus for determining network switching, relating to communication technology: a UE reports information on user network-switching conditions to a base station, which, on the basis of said information and upon network-switching conditions being fulfilled, determines whether or not to carry out network switching for the UE, thus allowing the determination to carry out network switching to be based on user preferences.

## Description

This application claims the benefit of Chinese Patent Application No. 201310111462.6, filed with the State Intellectual Property Office of People's Republic of China on April 01, 2013 and entitled "Method and device for deciding on network switching", which is hereby incorporated by reference in its entirety.

### Field

The present application relates to the field of communications and particularly to a method and device for deciding on network switching.

### Background

Along with the growing demands of subscribers and the developing communication technologies, more and more wireless communication technologies and related networks are emerging, e.g., the 2G/3G/4G mobile communication technologies and networks capable of providing wide coverage, Wireless Fidelity (WiFi) technologies and Wireless Local Area Networks (WLANs) capable of providing hotspot coverage, etc., so there are also a large number of emerging scenarios in which different types of communication networks coexist, e.g., a scenario in which the 2G/3G/4G networks coexist with the WLAN network.

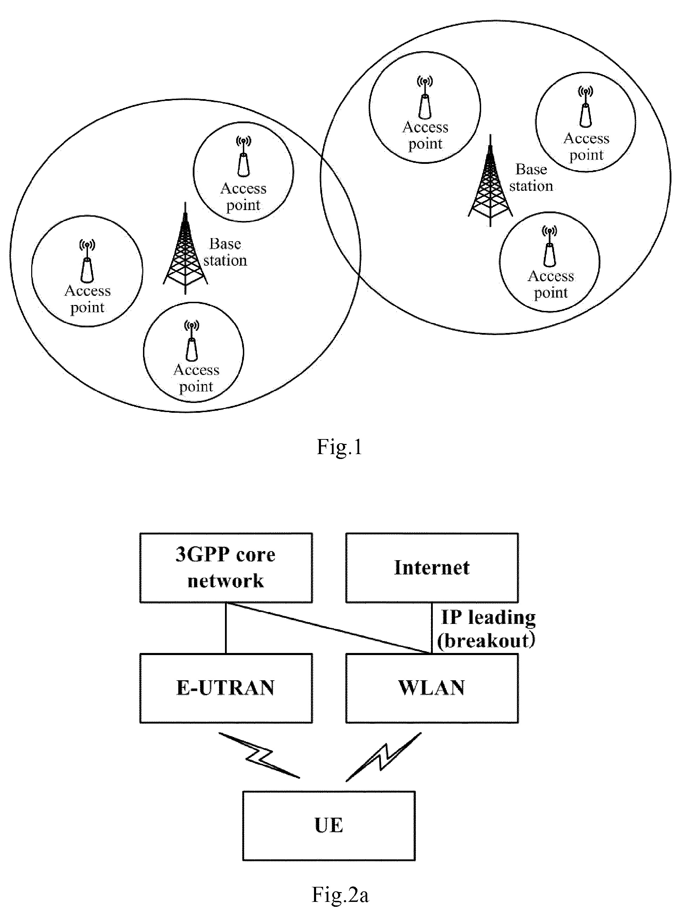

The Evolved Packet System (EPS) is a system which supports various access technologies and mobility between them. In the multi-access scenario, a User Equipment (UE) may be covered jointly by a number of 3rd Generation Partnership Project (3GPP) and/or non-3GPP access networks. These access networks may operate with different access technologies, may be served by different operators, and also may provide accesses to different core networks. Fig.1 illustrates the scenario in which a Universal Mobile Telecommunication System (UMTS)/Long Term Evolution (LTE) network coexists with the WLAN network, where there are a number of WLAN Access Points (APs) in a coverage area of a base station of the UMTS/LTE network (a Node B in the UMTS network, and an evolved Node B (eNB) in the LTE network), and coverage areas of the access points are smaller than that of the base station.

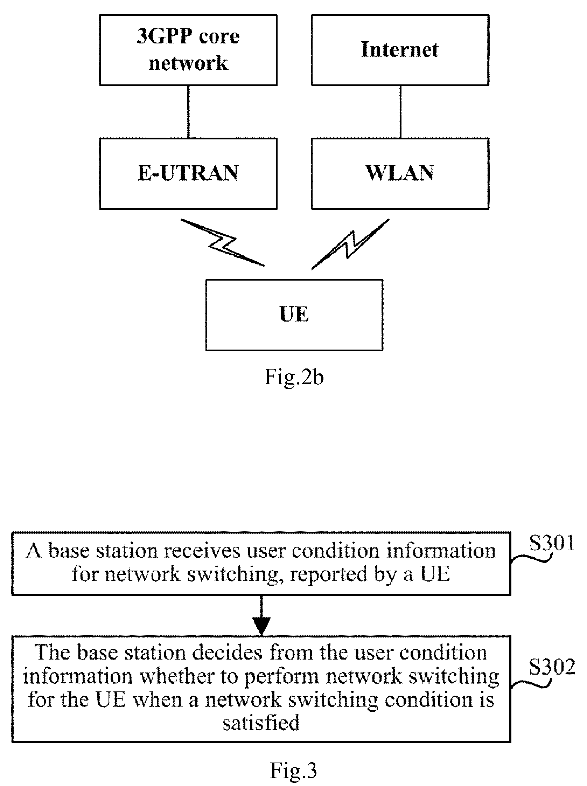

In the existing heterogeneous network scenario, traffic is offloaded for the UMTS/LTE network through the WLAN network, where there are generally two types of scenarios of seamless offloading and non-seamless offloading. As illustrated in Fig.2a, seamless offloading refers to that there is a connection between the WLAN network and the 3GPP Core Network (CN), and services still access the 3GPP (including the UMTS/LTE) core network after the traffic offloading is performed via the air interface. As illustrated in Fig.2b, non-seamless offloading refers to that there is no connection between the WLAN network and the 3GPP Core Network (CN), and services accesses the Internet directly without going through the 3GPP CN after the traffic offloading is performed via the air interface.

For offloading through the WLAN, a part of bearers of the UE may be transferred, or all the bearers of the UE may be transferred. If a part of bearers of the UE are transferred, then the UE will be connected with both the UMTS/LTE network and the WLAN network. If all the bearers of the UE may be transferred, then the UE will be connected with only the WLAN network after they are transferred.

Switching in the UMTS/LTE system refers to a procedure in which the UE is switched from a cell to another. In a particular air interface procedure, the base station sends a switching command to the UE; the UE is disconnected from a source cell, and initiates an access to a destination cell indicated in the switching command, upon reception of the switching command; and the UE sends a switching success message to a destination base station after accessing the destination cell successfully, thus completing the switching procedure.

Switching in the UMTS/LTE system can be performed as seamless/lossless switching.

Switching in the WLAN system refers to a procedure in which the UE is switched from an AP to another AP. In a particular air interface procedure, the UE discovers a new AP, and the UE decides to be switched to the AP according to its own algorithm; the UE is dissociated from the current AP; and the UE is associated with the new AP. The AP switching procedure ends after the association with the AP is established successfully.

Switching from the UMTS/LTE system to the WLAN system refers to a procedure in which the UE is switched from a UMTS/LTE cell to a WLAN AP. In a particular air interface procedure (taking switching in a reconfiguration procedure as an example):
1) The base station knows from a measurement report, geographical position information, etc., of the UE that the UE is approaching certain WLAN AP;
2) if the eNB decides to switch the UE to the WLAN, then the base station instructs the UE in an RRC connection reconfiguration procedure to be switched to the WLAN, where identification information of the destination AP (e.g., a frequency, an SSID, etc.) is included in an RRC connection reconfiguration message;
3) After the UE receives the reconfiguration message, the AS layer notifies the NAS layer that the UE needs to be switched to the WLAN network, and at this time the NAS layer of the UE triggers a WLAN module of the UE to search for the corresponding access point for association (an access); and
4) The UE can establish a corresponding PDN connection through the WLAN (seamless offloading) or access the Internet (non-seamless offloading) after being associated with the AP successfully. The AS layer of the UE sends an RRC connection reconfiguration complete message to the base station to notify the base station that a corresponding bearer switching has been completed.

Apparently the network controls the UE to be switched, for example, from the 3GPP network (e.g., UMTS/LTE) to the WLAN system, primarily taking into account a channel quality, positional information, etc., without considering whether the UE currently intends to be switched, so that some user who does not intend to be switched may be switched forcibly, for example, even if the user has just selected manually the 3GPP network, the user may still be switched to the WLAN network, thus degrading the experience of the user. If the user selects manually the 3GPP network again, then unnecessary ping-pong switching may occur, thus degrading the overall performance of the system.

### Summary

Embodiments of the application provide a method and device for deciding on network switching so as to decide whether to perform network switching, according to a preference of a user.

A method for deciding on network switching includes:
receiving, by a base station, user condition information for network switching, reported by a UE; and
deciding, by the base station from the user condition information, whether to perform network switching for the UE when a network switching condition is satisfied.

The embodiment of the application provides such a method for deciding on network switching that a UE reports user condition information for network switching to a base station, and the base station decides from the user condition information whether to perform network switching for the UE when a network switching condition is satisfied, so as to decide whether to perform network switching according to a preference of the user.

Preferably before the base station receives the user condition information for network switching, reported by the UE, the method further includes:
sending, by the base station, an inquiry message to the UE about the user condition information for network switching.

Further to any of the embodiments above of the method, preferably the user condition information includes one or a combination of:
whether to allow the UE to be switched to a non-3GPP network;
a list of services for which the UE is allowed to be switched to a non-3GPP network, or a list of services for which the UE is not allowed to be switched to a non-3GPP network;
priorities of a service network selected by the UE, and a service network selected by the network side for the UE; and
a period of time and/or a region in which no network switching is allowed to be performed after the UE selects a service network.

Further to any of the embodiments above of the method, preferably before the base station receives the user condition information for network switching, reported by the UE, the method further includes:
determining, by the base station, that the UE is allowed to report the user condition information for network switching, and notifying the UE via dedicated signalling or a broadcast

A method for deciding on network switching includes:
sending, by a base station, a switching command to a UE upon determining that the UE satisfies a switching condition;
receiving, by the base station, acceptance information or rejection information returned by the UE after the UE deciding from preset user condition information for network switching whether to accept switching; and
deciding, by the base station, from the acceptance information or the rejection information whether to further perform network switching for the UE.

The embodiment of the application provides such a method for deciding on network switching that a UE reports user condition information for network switching to a base station, and the base station decides from the user condition information whether to perform network switching for the UE when a network switching condition is satisfied, so as to decide whether to perform network switching, according to a preference of the user.

A method for deciding on network switching includes:
determining, by a UE, user condition information for network switching; and
reporting, by the UE, the user condition information for network switching to a base station, so that the base station decides from the user condition information whether to perform network switching for the UE when a network switching condition is satisfied.

The embodiment of the application provides such a method for deciding on network switching that a UE reports user condition information for network switching to a base station, and the base station decides from the user condition information whether to perform network switching for the UE when a network switching condition is satisfied, so as to decide whether to perform network switching, according to a preference of the user.

Preferably before the UE reports the user condition information for network switching to the base station, the method further includes:
receiving an inquiry message sent by the base station about the user condition information for network switching.

Further to any of the embodiments above of the method, preferably the user condition information includes one or a combination of:
whether to allow the UE to be switched to a non-3GPP network;
a list of services for which the UE is allowed to be switched to a non-3GPP network, or a list of services for which the UE is not allowed to be switched to a non-3GPP network;
priorities of a service network selected by the UE, and a service network selected by the network side for the UE; and
a period of time and/or a region in which no network switching is allowed to be performed after the UE selects a service network.

Further to any of the embodiments above of the method, preferably before the UE reports the user condition information for network switching to the base station, the method further includes:
receiving, by the UE, a message sent by the base station via dedicated signalling or a broadcast to indicate that the UE is allowed to report the user condition information for network switching.

A method for deciding on network switching includes:
receiving, by a UE, a switching command sent by a base station upon the base station determining that the UE satisfies a switching condition; and
returning, by the UE, acceptance information or rejection information to the base station after deciding from preset user condition information for network switching whether to accept switching, so that the base station decides from the acceptance information or the rejection information whether to further perform network switching for the UE.

The embodiment of the application provides such a method for deciding on network switching that a UE reports user condition information for network switching to a base station, and the base station decides from the user condition information whether to perform network switching for the UE when a network switching condition is satisfied, so as to decide whether to perform network switching, according to a preference of the user.

A device for deciding on network switching includes:
a receiving unit configured to receive user condition information for network switching, reported by a UE; and
a deciding unit configured to decide from the user condition information whether to perform network switching for the UE when a network switching condition is satisfied.

The embodiment of the application provides such a device for deciding on network switching that a UE reports user condition information for network switching to a base station, and the base station decides from the user condition information whether to perform network switching for the UE when a network switching condition is satisfied, so as to decide whether to perform network switching, according to a preference of the user.

Preferably the receiving unit is further configured:
to send an inquiry message to the UE about the user condition information for network switching before receiving the user condition information for network switching, reported by the UE.

Preferably the receiving unit is further configured:
to determine that the UE is allowed to report the user condition information for network switching, and to notify the UE via dedicated signalling or a broadcast, before receiving the user condition information for network switching, reported by the UE.

A device for deciding on network switching includes:
a radio frequency unit configured to receive user condition information for network switching, reported by a UE; and
a processor configured to decide from the user condition information whether to perform network switching for the UE when a network switching condition is satisfied.

The embodiment of the application provides such a device for deciding on network switching that a UE reports user condition information for network switching to a base station, and the base station decides from the user condition information whether to perform network switching for the UE when a network switching condition is satisfied, so as to decide whether to perform network switching, according to a preference of the user.

A device for deciding on network switching includes:
a sending unit configured to send a switching command to a UE upon determining that the UE satisfies a switching condition;
an information receiving unit configured to receive acceptance information or rejection information returned by the UE after the UE deciding from preset user condition information for network switching whether to accept switching; and
a switching deciding unit configured to decide from the acceptance information or the rejection information whether to further perform network switching for the UE.

The embodiment of the application provides such a device for deciding on network switching that a UE reports user condition information for network switching to a base station, and the base station decides from the user condition information whether to perform network switching for the UE when a network switching condition is satisfied, so as to decide whether to perform network switching, according to a preference of the user.

A device for deciding on network switching includes:
a radio frequency unit configured to send a switching command to a UE upon determining that the UE satisfies a switching condition; and to receive acceptance information or rejection information returned by the UE after the UE deciding from preset user condition information for network switching whether to accept switching; and
a processor configured to decide from the acceptance information or the rejection information whether to further perform network switching for the UE.

The embodiment of the application provides such a device for deciding on network switching that a UE reports user condition information for network switching to a base station, and the base station decides from the user condition information whether to perform network switching for the UE when a network switching condition is satisfied, so as to decide whether to perform network switching, according to a preference of the user.

A device for deciding on network switching includes:
a user condition information determining unit configured to determine user condition information for network switching; and
a reporting unit configured to report the user condition information for network switching to a base station, so that the base station decides from the user condition information whether to perform network switching for the UE when a network switching condition is satisfied.

The embodiment of the application provides such a device for deciding on network switching that a UE reports user condition information for network switching to a base station, and the base station decides from the user condition information whether to perform network switching for the UE when a network switching condition is satisfied, so as to decide whether to perform network switching, according to a preference of the user.

Preferably the reporting unit is further configured:
to receive an inquiry message sent by the base station about the user condition information for network switching before reporting the user condition information for network switching to the base station.

Preferably the reporting unit is further configured:
to receive a message sent by the base station via dedicated signalling or a broadcast to indicate that the UE is allowed to report the user condition information for network switching, before reporting the user condition information for network switching to the base station.

A device for deciding on network switching includes:
a processor configured to determine user condition information for network switching; and
a radio frequency unit configured to report the user condition information for network switching to a base station, so that the base station decides from the user condition information whether to perform network switching for the UE when a network switching condition is satisfied.

The embodiment of the application provides such a device for deciding on network switching that a UE reports user condition information for network switching to a base station, and the base station decides from the user condition information whether to perform network switching for the UE when a network switching condition is satisfied, so as to decide whether to perform network switching, according to a preference of the user.

A device for deciding on network switching includes:
a command receiving unit configured to receive a switching command sent by a base station upon the base station determining that the UE satisfies a switching condition; and
a deciding unit configured to return acceptance information or rejection information to the base station after deciding from preset user condition information for network switching whether to accept switching, so that the base station decides from the acceptance information or the rejection information whether to further perform network switching for the UE.

The embodiment of the application provides such a device for deciding on network switching that a UE reports user condition information for network switching to a base station, and the base station decides from the user condition information whether to perform network switching for the UE when a network switching condition is satisfied, so as to decide whether to perform network switching, according to a preference of the user.

A device for deciding on network switching includes:
a radio frequency unit configured to receive a switching command sent by a base station upon the base station determining that the UE satisfies a switching condition; and
a processor configured to return acceptance information or rejection information to the base station after deciding from preset user condition information for network switching whether to accept switching, so that the base station decides from the acceptance information or the rejection information whether to further perform network switching for the UE.

The embodiment of the application provides such a device for deciding on network switching that a UE reports user condition information for network switching to a base station, and the base station decides from the user condition information whether to perform network switching for the UE when a network switching condition is satisfied, so as to decide whether to perform network switching, according to a preference of the user.

### Brief Description of the Drawings

Fig.1 illustrates a schematic diagram of the scenario in which the UMTS/LTE network coexists with the WLAN network in the prior art;
Fig.2a illustrates a schematic diagram of the scenario of seamless offloading in the prior art;
Fig.2b illustrates a schematic diagram of the scenario of non-seamless offloading in the prior art;
Fig.3 illustrates a first flow chart of a method for deciding on network switching according to an embodiment of the application;
Fig.4 illustrates a second flow chart of a method for deciding on network switching according to an embodiment of the application;
Fig.5 illustrates a schematic diagram of an application scenario of respective embodiments according to the application;
Fig.6 illustrates a third flow chart of a method for deciding on network switching according to an embodiment of the application;
Fig.7 illustrates a fourth flow chart of a method for deciding on network switching according to an embodiment of the application;
Fig.8 illustrates a first schematic structural diagram of a device for deciding on network switching according to an embodiment of the application;
Fig.9 illustrates a second schematic structural diagram of a device for deciding on network switching according to an embodiment of the application;
Fig.10 illustrates a third schematic structural diagram of a device for deciding on network switching according to an embodiment of the application; and
Fig.11 illustrates a fourth schematic structural diagram of a device for deciding on network switching according to an embodiment of the application.

### Detailed Description of the Embodiments

Embodiments of the application provide such a method and device for deciding on network switching that a UE reports user condition information for network switching to a base station, and the base station decides from the user condition information whether to perform network switching for the UE when a network switching condition is satisfied, so as to decide whether to perform network switching, according to a preference of the user.

As illustrated in Fig.3, a method for deciding on network switching according to an embodiment of the application includes:
Operation S301, a base station receives user condition information for network switching, reported by a UE; and
Operation S302, the base station decides from the user condition information whether to perform network switching for the UE when a network switching condition is satisfied.

The UE can report the user condition information to the base station on its own initiative. Alternatively the UE can report the user condition information to the base station upon reception of an inquiry message sent by the base station, where the base station further sends to the UE the inquiry message about the user condition information for network switching, before the operation S301.

The user condition information (including a user preference) is typically set by a user according to a use habit, a preference, etc., of the user, and the user condition information can particularly include one or a combination of:
Whether to allow the UE to be switched to a non-3GPP network;
A list of services for which the UE is allowed to be switched to a non-3GPP network; or a list of services for which the UE is not allowed to be switched to a non-3GPP network;
Priorities of a service network selected by the UE, and a service network selected by the network side for the UE; and
A period of time and/or a region in which no network switching is allowed to be performed after the UE selects a service network.

Here the 3GPP network includes but will not be limited to a UMTS network, an LTE network, etc., and the non-3GPP network includes but will not be limited to a WLAN network, a WiFi network, etc.

Furthermore the base station can set a corresponding switch to control the UE to report the user condition information, and if the switch is opened, then the base station allows the UE to report the user condition information for network switching, notifies the UE via dedicated signalling or a broadcast, receives the user condition information for network switching, reported by the UE, and control switching according to the user condition information; and if the switch is closed, then the base station does not allow the UE to report the user condition information for network switching. Further to this, the base station decides that the UE is allowed to report the user condition information for network switching, and notifies the UE via dedicated signalling or a broadcast, before receiving the user condition information for network switching, reported by the UE.

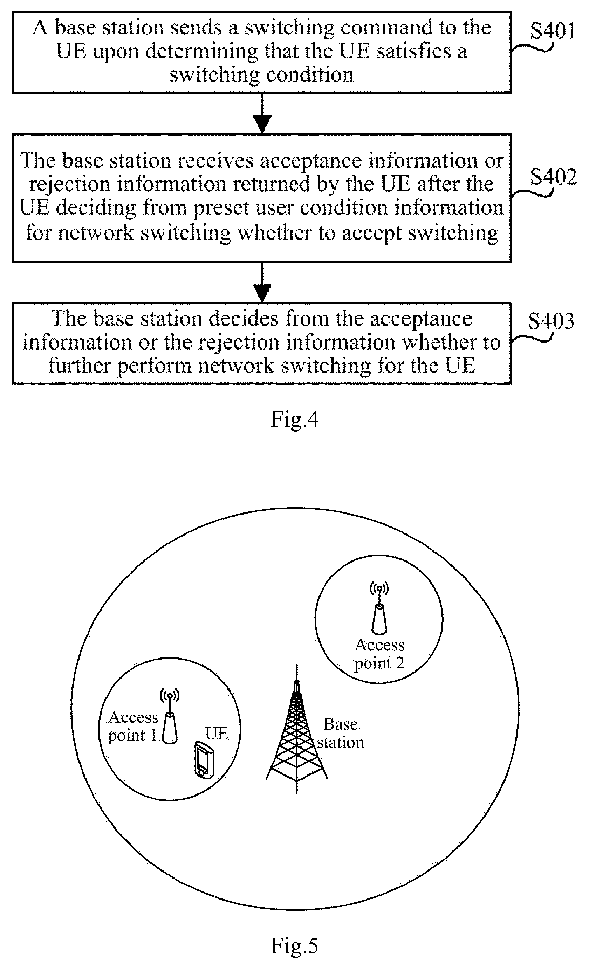

An embodiment of the application further provides a method for deciding on network switching, where a UE decides from user condition information whether to be switched, and as illustrated in Fig.4, the method includes:
Operation S401, a base station sends a switching command to the UE upon deciding that the UE satisfies a switching condition;
Operation S402, the base station receives acceptance information or rejection information returned by the UE after the UE deciding from preset user condition information for network switching whether to accept switching; and
Operation S403, the base station decides from the acceptance information or the rejection information whether to further perform network switching for the UE.

The method for deciding on network switching will be described below in details in connection with particular embodiments thereof.

### First Embodiment

Fig.5 illustrates a network scenario in this embodiment, where a base station can be a Node B in a UMTS system, or can be an eNB in an LTE system.

After accessing the base station, a UE reports its own user preference to the network on its own initiative, for example, whether to allow the network switches the UE to a WLAN, or which category of service can be decided by the network to be switched to the WLAN, or priority information of manual selection by the UE and automatic selection by the network, etc.; and the UE will report the user preference again if it is changed.

If the UE moves into a coverage area of an Access Point 1, then the base station decides from the user condition information whether to perform switching, and if the user condition information of the UE indicates no access to the WLAN at this time, then the base station still has the UE stay in the current network without switching. If the user condition information of the UE indicates an access to the WLAN at this time, then the base station initiates a switching procedure to switch the UE from the current network to the WLAN network.

If the UE is switched in a 3GPP system, then a source eNB can send its own stored user preference information to a destination eNB in a switching procedure.

### Second Embodiment

A network scenario of this embodiment is the same as that of the first embodiment.

In this embodiment, a base station inquires a UE about a user preference, and the UE reports the user preference; and then the base station decides from the user condition information whether to perform switching subsequently; and
If the base station determines that the UE approaches a coverage area of an Access Point 1, then the base station inquires the UE about its own user preference via downlink RRC dedicated signalling (e.g., a UE information inquiry message), and the UE report its own user preference information to the base station upon reception of the signalling. The base station stores the information upon reception thereof, and subsequently decides from the information whether to perform switching. If the information reported by the UE indicates no access to a WLAN, then if the UE comes into the coverage area of the Access Point 1, then the base station still has the UE stay in the current 3GPP network without switching; and if the information reported by the UE indicates an access to the WLAN, then the base station initiates a switching procedure to switch the UE from the current network to the WLAN network.

If the UE is switched in a 3GPP system, then a source eNB can send its own stored user preference information to a destination eNB in a switching procedure.

### Third Embodiment

A network scenario of this embodiment is the same as that of the first embodiment.

A UE instructs the network not to perform network switching in some period of time (which is set by a timer) or position (which is set by a BSSID or SSID coverage area of an AP) each time the manual selection is made for the UE.

For the UE in a coverage area of both 3GPP and WLAN networks, the 3GPP network is selected manually, and then the UE instructs the base station not to perform switching under 3GPP base station control in some period of time (e.g., a length of a timer is reported) or position (e.g., a BSSID or SSID coverage area of a WLAN AP). The base station stores the information upon reception thereof. If the UE comes into a coverage area of an Access Point 1, then the base station decides from the information not to perform switching. If the timer expires or the UE goes into a coverage area of another Access Point later, then the base station can decide to perform switching for the UE.

If the UE is switched in a 3GPP system, then a source eNB can send its own stored user preference information to a destination eNB in a switching procedure.

### Fourth Embodiment

A network scenario of this embodiment is the same as that of the first embodiment.

A base station sets a switch to indicate whether allow a UE to report its own user preference, and if the switch is opened, then the UE is allowed to report its own user preference to the network, and the UE reports the user preference again if it is changed later; and if the switch is closed, then the UE can not report any user preference information.

The UE resides in a coverage area of the base station. The base station sets a switch to indicate whether allow a UE to report its own user preference, and notifies the UE via dedicated signalling or a broadcast. If the switch is opened, then the UE reports its own user preference to the network, and the UE reports the user preference again if it is changed later; and if the switch is closed, then the UE can not report any user preference information. If the UE reports its own user preference information when the switch is opened, then the network subsequently makes a switching decision based upon the information. For example, if the UE moves into a coverage area of an Access Point 1, then if the user condition information of the UE indicates no access to a WLAN, then the base station still has the UE stay in the current network without switching. If the user condition information of the UE indicates an access to the WLAN, then the base station initiates a switching procedure to switch the UE from the current network to the WLAN network.

If the UE is switched in a 3GPP system, then a source eNB can send its own stored user preference information to a destination eNB in a switching procedure.

### Fifth Embodiment

A network scenario of this embodiment is the same as that of the first embodiment.

A base station sends a switching command to a UE to instruct the UE to be switched to a WLAN, and the UE decides from its own user preference whether to accept this switching, upon reception of the switching command, and if the UE decides from the user preference to reject this switching, then the UE will notify the network of rejection information.

Particularly the UE keeps connected with the base station. At this time the UE moves into a coverage area of an Access Point 1, and the base station is ready for switching the UE to the WLAN, and sends a switching command to the UE. The UE decides from its own user preference whether to accept this switching, upon reception of the switching command, and if the current user preference of the UE indicates that the UE stays in a 3GPP network without accessing the WLAN, then the UE decides to reject this switching at this time, and then the UE reports information about rejection of this switching to the base station via RRC dedicated signalling. The base station will decide not to switch the UE any further, upon reception of the information.

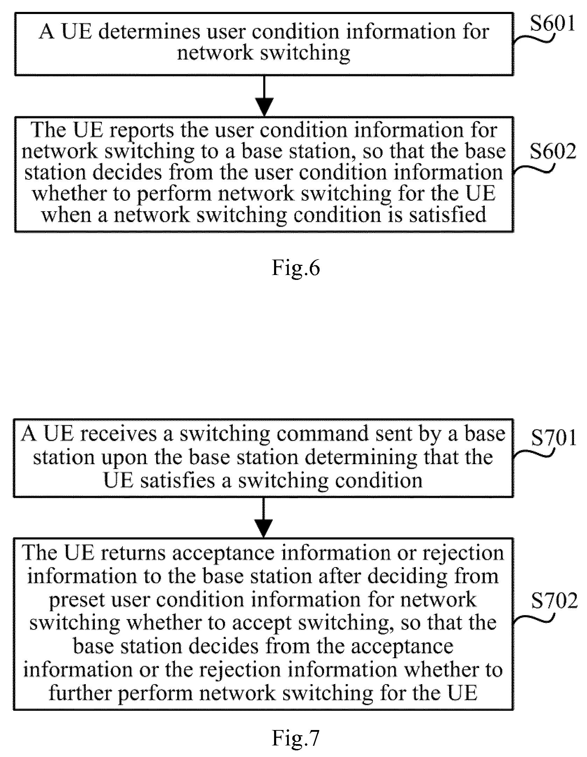

An embodiment of the application further provides correspondingly a method for deciding on network switching at the UE side, as illustrated in Fig.6, where the method includes:
Operation S601, a UE determines user condition information for network switching; and
Operation S602, the UE reports the user condition information for network switching to a base station, so that the base station decides from the user condition information whether to perform network switching for the UE when a network switching condition is satisfied.

Here before the UE reports the user condition information for network switching to the base station, the method further includes:
The UE receives an inquiry message sent by the base station about the user condition information for network switching.

The user condition information particularly includes one or a combination of:
Whether to allow the UE to be switched to a non-3GPP network;
A list of services for which the UE is allowed to be switched to a non-3GPP network, or a list of services for which the UE is not allowed to be switched to a non-3GPP network;
Priorities of a service network selected by the UE, and a service network selected by the network side for the UE; and
A period of time and/or a region in which no network switching is allowed to be performed after the UE selects a service network.

Furthermore before the UE reports the user condition information for network switching to the base station, the method further includes:
The UE receives a message sent by the base station via dedicated signalling or a broadcast to indicate that the UE is allowed to report the user condition information for network switching.

An embodiment of the application further provides a method for deciding on network switching at the UE side, as illustrated in Fig.7, where the method includes:
Operation S701, a UE receives a switching command sent by a base station upon determining that the UE satisfies a switching condition; and
Operation S702, the UE returns acceptance information or rejection information to the base station after deciding from preset user condition information for network switching whether to accept switching, so that the base station decides from the acceptance information or the rejection information whether to further perform network switching for the UE.

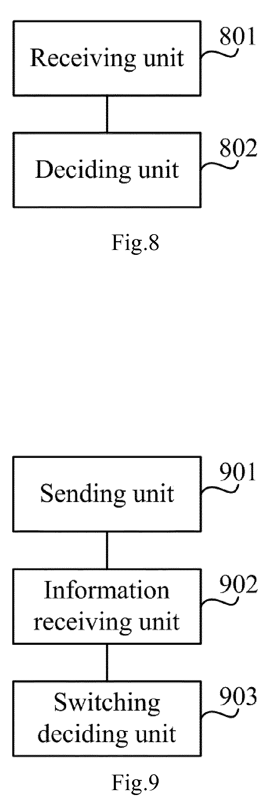

An embodiment of the application further provides a device for deciding on network switching, which can particularly be a base station, as illustrated in Fig.8, where the device includes:
A receiving unit 801 is configured to receive user condition information for network switching, reported by a User Equipment (UE); and
A deciding unit 802 is configured to decide from the user condition information whether to perform network switching for the UE when a network switching condition is satisfied.

Here the receiving unit 801 is further configured:
To send an inquiry message to the UE about the user condition information for network switching before receiving the user condition information for network switching, reported by the UE.

The receiving unit 802 is further configured:
To determine that the UE is allowed to report the user condition information for network switching, and to notify the UE via dedicated signalling or a broadcast, before receiving the user condition information for network switching, reported by the UE.

An embodiment of the application further provides a device for deciding on network switching, which can particularly be a base station, including:
A radio frequency unit is configured to receive user condition information for network switching, reported by a UE; and
A processor is configured to decide from the user condition information whether to perform network switching for the UE when a network switching condition is satisfied.

An embodiment of the application further provides a device for deciding on network switching, which can particularly a base station, as illustrated in Fig.9, where the device includes:
A sending unit 901 is configured to send a switching command to a User Equipment (UE) upon determining that the UE satisfies a switching condition;
An information receiving unit 902 is configured to receive acceptance information or rejection information returned by the UE after the UE deciding from preset user condition information for network switching whether to accept switching; and
A switching deciding unit 903 is configured to decide from the acceptance information or the rejection information whether to further perform network switching for the UE.

An embodiment of the application further provides a device for deciding on network switching, which can particularly be a base station, including:
A radio frequency unit is configured to send a switching command to a User Equipment (UE) upon determining that the UE satisfies a switching condition; and to receive acceptance information or rejection information returned by the UE after the UE deciding from preset user condition information for network switching whether to accept switching; and
A processor is configured to decide from the acceptance information or the rejection information whether to further perform network switching for the UE.

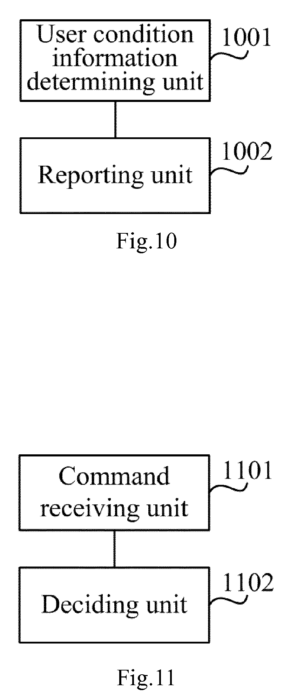

An embodiment of the application further provides correspondingly a device for deciding on network switching, which can particularly be a UE, as illustrated in Fig.10, where the device includes:
A user condition information determining unit 1001 is configured to determine user condition information for network switching; and
A reporting unit 1002 is configured to report the user condition information for network switching to a base station, so that the base station decides from the user condition information whether to perform network switching for the UE when a network switching condition is satisfied.

Here the reporting unit 1002 is further configured:
To receive an inquiry message sent by the base station about the user condition information for network switching before reporting the user condition information for network switching to the base station.

The reporting unit 1002 is further configured:
To receive a message sent by the base station via dedicated signalling or a broadcast to indicate that the UE is allowed to report the user condition information for network switching, before reporting the user condition information for network switching to the base station.

An embodiment of the application further provides a device for deciding on network switching, which can particularly be a UE, including:
A processor is configured to determine user condition information for network switching; and
A radio frequency unit is configured to report the user condition information for network switching to a base station, so that the base station decides from the user condition information whether to perform network switching for the UE when a network switching condition is satisfied.

An embodiment of the application further provides correspondingly a device for deciding on network switching, which can particularly be a UE, as illustrated in Fig.11, where the device includes:
A command receiving unit 1101 is configured to receive a switching command sent by a base station upon the base station determining that the UE satisfies a switching condition; and
A deciding unit 1102 is configured to return acceptance information or rejection information to the base station after deciding from preset user condition information for network switching whether to accept switching, so that the base station decides from the acceptance information or the rejection information whether to further perform network switching for the UE.

A device for deciding on network switching, including:
A radio frequency unit is configured to receive a switching command sent by a base station upon the base station determining that the UE satisfies a switching condition; and
A processor is configured to return acceptance information or rejection information to the base station after deciding from preset user condition information for network switching whether to accept switching, so that the base station decides from the acceptance information or the rejection information whether to further perform network switching for the UE.

The embodiments of the application provide such a method and device for deciding on network switching that a UE reports user condition information for network switching to a base station, and the base station decides from the user condition information whether to perform network switching for the UE when a network switching condition is satisfied, so as to decide whether to perform network switching according to a preference of the user.

Those skilled in the art shall appreciate that the embodiments of the application can be embodied as a method, a system or a computer program product. Therefore the application can be embodied in the form of an all-hardware embodiment, an all-software embodiment or an embodiment of software and hardware in combination. Furthermore the application can be embodied in the form of a computer program product embodied in one or more computer useable storage mediums (including but not limited to a disk memory, a CD-ROM, an optical memory, etc.) in which computer useable program codes are contained.

The application has been described in a flow chart and/or a block diagram of the method, the device (system) and the computer program product according to the embodiments of the application. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the application have been described, those skilled in the art benefiting from the underlying inventive concept can make additional modifications and variations to these embodiments. Therefore the appended claims are intended to be construed as encompassing the preferred embodiments and all the modifications and variations coming into the scope of the application.

Evidently those skilled in the art can make various modifications and variations to the application without departing from the spirit and scope of the application. Thus the application is also intended to encompass these modifications and variations thereto so long as the modifications and variations come into the scope of the claims appended to the application and their equivalents.

## Claims

1. A method for deciding on network switching, the method comprising:
receiving, by a base station, user condition information for network switching, reported by a User Equipment, UE; and
deciding, by the base station from the user condition information, whether to perform network switching for the UE when a network switching condition is satisfied.

2. The method according to claim 1, wherein before the base station receives the user condition information for network switching, reported by the UE, the method further comprises:
sending, by the base station, an inquiry message to the UE about the user condition information for network switching.

3. The method according to claim 1, wherein the user condition information comprises one or a combination of:
whether to allow the UE to be switched to a non-3rd Generation Partnership Project, non-3GPP, network;
a list of services for which the UE is allowed to be switched to the non-3GPP network, or a list of services for which the UE is not allowed to be switched to the non-3GPP network;
priorities of a service network selected by the UE, and a service network selected by the network side for the UE; and
a period of time and/or a region in which no network switching is allowed to be performed after the UE selects a service network.

4. The method according to claim 1, wherein before the base station receives the user condition information for network switching, reported by the UE, the method further comprises:
determining, by the base station, that the UE is allowed to report the user condition information for network switching, and notifying the UE via dedicated signalling or a broadcast.

5. A method for deciding on network switching, the method comprising:
sending, by a base station, a switching command to a User Equipment, UE, upon determining that the UE satisfies a switching condition;
receiving, by the base station, acceptance information or rejection information returned by the UE after the UE deciding from preset user condition information for network switching whether to accept switching; and
deciding, by the base station, from the acceptance information or the rejection information whether to further perform network switching for the UE.

6. A method for deciding on network switching, wherein
determining, by a User Equipment, UE, user condition information for network switching; and
reporting, by the UE, the user condition information for network switching to a base station, so that the base station decides from the user condition information whether to perform network switching for the UE when a network switching condition is satisfied.

7. The method according to claim 6, wherein before the UE reports the user condition information for network switching to the base station, the method further comprises:
receiving an inquiry message sent by the base station about the user condition information for network switching.

8. The method according to claim 6, wherein the user condition information comprises one or a combination of:
whether to allow the UE to be switched to a non-3rd Generation Partnership Project, non-3GPP, network;
a list of services for which the UE is allowed to be switched to a non-3GPP network, or a list of services for which the UE is not allowed to be switched to a non-3GPP network;
priorities of a service network selected by the UE, and a service network selected by the network side for the UE; and
a period of time and/or a region in which no network switching is allowed to be performed after the UE selects a service network.

9. The method according to claim 6, wherein before the UE reports the user condition information for network switching to the base station, the method further comprises:
receiving, by the UE, a message sent by the base station via dedicated signalling or a broadcast to indicate that the UE is allowed to report the user condition information for network switching.

10. A method for deciding on network switching, the method comprising:
receiving, by a User Equipment, UE, a switching command sent by a base station upon the base station determining that the UE satisfies a switching condition; and
returning, by the UE, acceptance information or rejection information to the base station after deciding from preset user condition information for network switching whether to accept switching, so that the base station decides from the acceptance information or the rejection information whether to further perform network switching for the UE.

11. A device for deciding on network switching, the device comprising:
a receiving unit configured to receive user condition information for network switching, reported by a User Equipment, UE; and
a deciding unit configured to decide from the user condition information whether to perform network switching for the UE when a network switching condition is satisfied.

12. The device according to claim 11, wherein the receiving unit is further configured:
to send an inquiry message to the UE about the user condition information for network switching before receiving the user condition information for network switching, reported by the UE.

13. The device according to claim 11, wherein the receiving unit is further configured:
to determine that the UE is allowed to report the user condition information for network switching, and to notify the UE via dedicated signalling or a broadcast, before receiving the user condition information for network switching, reported by the UE.

14. A device for deciding on network switching, the device comprising:
a sending unit configured to send a switching command to a User Equipment, UE, upon determining that the UE satisfies a switching condition;
an information receiving unit configured to receive acceptance information or rejection information returned by the UE after the UE deciding from preset user condition information for network switching whether to accept switching; and
a switching deciding unit configured to decide from the acceptance information or the rejection information whether to further perform network switching for the UE.

15. A device for deciding on network switching, the device comprising:
a user condition information determining unit configured to determine user condition information for network switching; and
a reporting unit configured to report the user condition information for network switching to a base station, so that the base station decides from the user condition information whether to perform network switching for the UE when a network switching condition is satisfied.

16. The device according to claim 15, wherein the reporting unit is further configured:
to receive an inquiry message sent by the base station about the user condition information for network switching before reporting the user condition information for network switching to the base station.

17. The device according to claim 15, wherein the reporting unit is further configured:
to receive a message sent by the base station via dedicated signalling or a broadcast to indicate that the UE is allowed to report the user condition information for network switching, before reporting the user condition information for network switching to the base station.

18. A device for deciding on network switching, the device comprising:
a command receiving unit configured to receive a switching command sent by a base station upon the base station determining that the UE satisfies a switching condition; and
a deciding unit configured to return acceptance information or rejection information to the base station after deciding from preset user condition information for network switching whether to accept switching, so that the base station decides from the acceptance information or the rejection information whether to further perform network switching for the UE.
